# EUROPÄISCHE PATENTANMELDUNG

(11) **EP 4 677 984 A1**
(43) Veröffentlichungstag der Anmeldung: **14.01.2026**
(21) Anmeldenummer: 25170347.6
(22) Anmeldetag: 14.04.2025
(51) Int. Cl.: A01C 7/08, A01C 21/00

(54) **LANDWIRTSCHAFTLICHE AUSBRINGMASCHINE**

(30) Priorität: 12.07.2024 DE 102024119904
(71) Anmelder: Pöttinger Landtechnik GmbH, 4710 Grieskirchen (AT)
(72) Erfinder: LOHER, Felix, 4710 Grieskirchen (AT); KIRCHMAYR, Alois, 4710 Grieskirchen (AT); STADLBAUER, Franz, 4710 Grieskirchen (AT); SCHULTE, Thorsten, 4710 Grieskirchen (AT)
(74) Vertreter: Lorenz Seidler Gossel Part. mbB

(57) **Zusammenfassung**

Die vorliegende Erfindung betrifft ein Verfahren zum Ausbringen von körnigem Gut wie Saatgut oder Dünger mit Hilfe einer landwirtschaftlichen Ausbringmaschine (1), die einen pneumatischen Verteilerkopf (7) mit einer Vielzahl von Abgängen (18) aufweist, an die zu Ausbringelementen (10) führende Ausbringleitungen (9) angeschlossen sind, wobei zum Einstellen des Reihenabstands, in dem das körnige Gut ausgebracht wird, eine Untergruppe der Abgänge (18) für den Durchgang von körnigem Gut blockiert und das körnige Gut nur noch von jedem n-ten Ausbringelement (10) ausgebracht wird, wobei bei einem mäanderförmigen Befahren von Fahrgassen mithilfe einer Fahrgassenschaltung (22) von Fahrgasse zu Fahrgasse unterschiedliche Untergruppen von Abgängen (18) abgesperrt werden derart, dass unter Beibehaltung des Reihenabstands die von den jeweils aktiven, offen bleibenden Ausbringelementen (10) definierte Arbeitsbreite quer zur Fahrtrichtung um den Betrag n-1 Ausbringelemente (10) quer versetzt wird.

## Beschreibung

Die vorliegende Erfindung betrifft eine landwirtschaftliche Ausbringmaschine sowie ein Verfahren zum Ausbringen von körnigem Gut wie Saatgut oder Dünger, mit einem pneumatischen Verteilerkopf, der eine Vielzahl von Abgängen aufweist, an die zu Ausbringelementen führende Ausbringleitungen angeschlossen sind, wobei eine Einstellvorrichtung zum Einstellen der Reihenabstände, in denen das körnige Gut ausbringbar ist, vorgesehen ist und Absperrmittel zum Sperren einer Untergruppe der Abgänge für den Durchgang von körnigem Gut derart, dass das körnige Gut nur noch von jedem n-ten Ausbringelement ablegbar ist, aufweist.

Bei pneumatisch arbeitenden Sämaschinen werden üblicherweise mit Hilfe eines Luftstroms Saatgut, Dünger oder ähnliche körnige Stoffe aus einem Saatgut- bzw. Speicherbehälter durch ein Rohr zu einem Verteilerkopf geführt, in dem das körnige Gut auf eine Mehrzahl von Abgängen verteilt wird, die über Rohre, Schläuche oder ähnliche Ausbringleitungen mit entsprechenden Ausbringelementen verbunden sind, die in Reihe nebeneinander bzw. auch in Fahrtrichtung versetzt hintereinander angeordnet sind. Über diese Ausbringelemente wird das auszubringende Gut in mehreren Reihen nebeneinander auf den bzw. in den Boden abgelegt. Der Verteilerkopf sorgt hierbei dafür, dass das Saatgut zumindest näherungsweise gleichmäßig auf die im Verteilerkopf angeordneten Abgänge und die damit verbundenen Ausbringelemente verteilt wird. Üblicherweise umfasst der Verteilerkopf hierzu einen zumindest näherungsweise rotationssymmetrischen, grob gesprochen pilzkopfförmigen Verteilerraum, dem durch ein zentrales Zuführrohr das körnige Gut von unten her eingeblasen wird, so dass sich das körnige Gut in dem Verteilerraum auf die außen liegend angeordneten Abgänge verteilt.

Bei bestimmten Getreidesorten, beispielsweise bei Weizen, hat das Saatgut eine kleine Kornabmessung und kann in relativ engen Reihen und mit kleinen Abständen zwischen den Saatgutkörnern in der jeweiligen Reihe gesät werden. Bei anderen Sorten hingegen, beispielsweise bei Mais, mit einer größeren Kornabmessung wird normalerweise ein größerer Abstand zwischen den Reihen und auch zwischen den Körnern benötigt.

Um dieselbe Sämaschine für das Ausbringen verschiedener Getreidesorten verwenden zu können, besitzen moderne Sämaschinen eine Einstellvorrichtung zum Einstellen des Reihenabstands, wobei diese Einstellvorrichtungen üblicherweise mit Absperrmitteln arbeiten, die einen Teil der Abgänge des Verteilerkopfes für den Durchgang von Saatgut absperren, so dass das Saatgut nur noch durch die verbleibenden Abgänge ausgetragen wird und beispielsweise nur noch über jedes zweite oder jedes dritte oder jedes vierte Ausbringelement abgelegt wird, während die dazwischen liegenden Ausbringelemente kein Gut mehr ausbringen.

Die Absperrmittel können dabei in verschiedener Weise ausgebildet sein, wobei ein jeweils abgesperrter Abgang oft nicht hermetisch abgeriegelt wird, sondern sehr wohl noch für Luft durchgängig ist, so dass die Strömungsverhältnisse in den diesbezüglich empfindlichen Verteilerkopf nicht gestört werden, insbesondere keine zu hohen Strömungsgeschwindigkeiten entstehen. Beispielsweise können die Absperrmittel einen Verteilerkopfeinsatz umfassen, der beispielsweise gitterartige oder netzartige Absperrelemente für einzelne Abgänge aufweisen kann, die zwar das körnige Gut abfangen, andererseits jedoch für Luft durchgängig sind. Solche Verteilerkopfeinsätze sind beispielsweise aus den Schriften EP 22 69 434 B1, EP 14 78 221 B1 oder DE 10 2022 120 275 A1 bekannt. Einen ähnlichen Verteilerkopfeinsatz zeigt auch die Schrift EP 3 689 122 B1, wobei der in dieser Schrift gezeigte Verteilerkopfeinsatz nicht der Verstellung des Reihenabstandes dient, sondern einer Halbseitenabschaltung, die beispielsweise bei asymmetrischen Feldrändern dazu genutzt wird, beispielsweise eine rechte Maschinenhälfte bzw. die rechte Hälfte der Arbeitsbreite stillzulegen, wenn am Feldrand die volle Arbeitsbreite nicht mehr ausgebracht werden kann.

Anstelle von gitterförmigen Absperrelementen können die Absperrmittel auch nach dem Bypassprinzip arbeiten und das körnige Gut nebst Luftstrom zwar zunächst in einen Abgang einströmen lassen, dann aber umleiten, bevor das körnige Gut in die Ausbringleitung und über diese zu den Ausbringelementen gelangt, wobei das körnige Gut zusammen mit dem Luftstrom zurück in das Steigrohr des Verteilerkopfes bzw. einem dem Steigrohr vorgeschalteten Sammeltrichter zurückgeführt wird, um erneut in den Verteilerkopf gelangen zu können. Solche bypassartigen Absperrelemente haben den Vorteil, dass das in den Verteilerkopf gelangende körnige Gut nicht vollends auf die offen gebliebenen Ausbringleitungen verteilt wird, was zu einer insgesamt erhöhten Beschickung der offen gebliebenen Ausbringleitungen führen würde. Mit solchen bypassartigen Absperrmitteln erhält jede Ausbringleitung an sich nur den Anteil an körnigem Gut, den die jeweilige Leitung auch erhalten würde, wenn alle Ausbringleitungen offen geblieben wären, vgl. EP 28 05 596 B1 und EP 40 00 364 A1.

Wenn die landwirtschaftliche Ausbringmaschine mit vergrößertem Reihenabstand arbeitet, also beispielsweise nur noch jede zweite oder jede dritte Ausbringleitung beschickt wird, ergibt sich jedoch regelmäßig das Problem, dass die verbleibende Arbeitsbreite - im Vergleich zur vollen Arbeitsbreite mit allen offenen Leitungen - zu einer Maschinenseite hin versetzt ist. Die Arbeitsbreite bleibt zwar bei einer Verbreiterung des Reihenabstands insgesamt - größenordnungsmäßig bzw. näherungsweise - gleich groß wie beim Arbeiten mit allen Ausbringelementen, es fehlt jedoch an einer Maschinenseite ein kleineres Stück aufgrund des dort inaktiven Ausbringelements. Wird beispielsweise bei 24 Ausbringelementen jedes zweite Ausbringelement abgesperrt, bleibt beispielsweise das erste Ausbringelement, das ganz auf der linken Maschinenseite liegt, offen, während jedes zweite und damit auch das 24.

Ausbringelement, das ganz rechts angeordnet ist, abgesperrt ist. Die geringfügig reduzierte Arbeitsbreite ist per se an sich noch kein größeres Problem, jedoch ergibt sich beim mäanderförmigen, hin- und hergehenden Abfahren der Fahrgassen das Problem, dass beim Anschlussfahren die verbliebene Arbeitsbreite asymmetrisch geworden bzw. der Abstand des randseitig letzten offenen Ausbringelements, also der Summe der offen gebliebenen Ausbringelemente, von den linken und rechten Maschinenrändern unterschiedlich groß ist. Um trotzdem über die Fahrgassen-Grenzen hinweg gleichbleibende Reihenabstände zu erzielen, kann der Spurreißer im Vorgewende umgestellt werden, d.h. er wird nicht nur von der linken auf die rechte Maschinenseite verschwenkt bzw. umgestellt, sondern auch in der Breite verstellt. Konkret kann der Spuranreißer, wenn mit dem linken Maschinenrand an der schon bearbeiteten Fahrgasse entlanggefahren wird, ein anderer Abstand eingestellt werden, als wenn bei umgekehrter Fahrrichtung mit dem rechten Maschinenrand an einer schon bearbeiteten Fahrgasse entlanggefahren wird.

Ein solches Umstellen des Spuranreißers ist jedoch relativ aufwändig und auch je nach verwendetem Schlepper bzw. bei älteren Maschinen oft gar nicht möglich bzw. nur händisch zu erledigen, was den Bedienkomfort und auch die Flächenleistung beeinträchtigen würde.

Hiervon ausgehend liegt der vorliegenden Erfindung die Aufgabe zugrunde, eine verbesserte landwirtschaftliche Ausbringmaschine der genannten Art zu schaffen, die Nachteile des Standes der Technik vermeidet und Letzteren in vorteilhafter Weise weiterbildet. Insbesondere soll eine verbesserte Einstellung des Reihenabstands erreicht werden, die auch bei abgesperrten Ausbringelementen zur Erzielung eines größeren Reihenabstands ein vereinfachtes Anschlussfahren ohne Umstellung des Spurreißers ermöglicht.

Erfindungsgemäß wird die genannte Aufgabe durch ein Verfahren gemäß Anspruch 1 sowie eine landwirtschaftliche Ausbringmaschine gemäß Anspruch 3 gelöst. Bevorzugte Ausgestaltungen der Erfindung sind Gegenstand der abhängigen Ansprüche.

Es wird also vorgeschlagen, von Fahrgasse zu Fahrgasse andere Ausbringelemente abzusperren, und zwar weiterhin in jeder Fahrgasse nur jedes n-te Ausbringelement aktiv mit körnigem Gut zu beschicken und den Reihenabstand konstant zu halten, jedoch das dem Maschinenrand nächstkommende, offene bzw. aktive Ausbringelement einmal am rechten Maschinenrand und einmal am linken Maschinenrand zu haben, so dass beim mäanderförmigen Abfahren der Fahrgassen beim Anschlussfahren an eine schon bearbeitete Fahrgasse der Reihenabstand über die Fahrgassengrenzen hinweg der gleiche bleibt, ohne den Spurreiser verstellen zu müssen. Erfindungsgemäß besitzt die Einstellvorrichtung zum Einstellen des Reihenabstands eine Fahrgassenschaltung zum Umschalten der Absperrmittel von Fahrgasse zu Fahrgasse derart, dass unter Beibehaltung des Reihenabstands die aktiv bleibenden, jeweils n-ten Ausbringelemente quer zur Fahrtrichtung verstellbar sind. Die Fahrgassenschaltung sperrt hierfür jeweils andere Abgänge des Verteilerkopfs für das auszubringende körnige Gut ab, so dass einmal das zum Maschinenrand nächstliegende, offen bleibende aktive Ausbringelement einmal auf der rechten Maschinenseite und einmal auf der linken Maschinenseite ist.

Die zur Maschinenmitte asymmetrische Arbeitsbreite kann asymmetrisch bleiben, jedoch durch die Fahrgassenschaltung spiegelbildlich hin und her geschaltet werden, so dass die bei vergrößertem Reihenabstand geringfügig kleinere Arbeitsbreite einmal nach rechts und einmal nach links zur Maschinenmitte versetzt werden kann. Das durch ein oder mehrere abgeschaltete Ausbringelemente fehlende Stück der vollständigen Arbeitsbreite, die gegeben ist, wenn alle Ausbringelemente aktiv sind, ist einmal rechts und einmal links am Maschinenrand.

Insbesondere kann die Fahrgassenschaltung dazu ausgebildet sein, das Muster der für das körnige Gut abgesperrten Abgänge um n-1 nach rechts bzw. links hin und her zu schieben, wenn jedes n-te Ausbringelement aktiv bleiben soll. Wird beispielsweise jedes zweite Ausbringelement abgesperrt und mit jedem zweiten Ausbringelement körniges Gut ausgebracht, wird das Absperrmuster um jeweils ein Ausbringelement nach rechts bzw. zurück wieder nach links verschoben. Wird der Reihenabstand noch weiter vergrößert und bleibt beispielsweise nur jedes dritte Ausbringelement offen, indem immer zwei Ausbringelemente zwischen den offen bleibenden Ausbringelementen abgesperrt werden, kann die Fahrgassenschaltung das durch die Absperrmittel erzielte Absperrmuster um "3 minus 1", d.h. um zwei Ausbringelemente nach rechts bzw. zurück wieder nach links verschieben.

Die genannte Fahrgassenschaltung kann grundsätzlich verschieden ausgebildet sein, wobei eine einfache Ausführung darin bestehen kann, dass die Fahrgassenschaltung manuell betätigbar ausgebildet ist. Beispielsweise können die Absperrmittel durch einen manuellen Betätiger von dem einen Absperrmuster zum anderen Absperrmuster umgelegt werden, um das Muster der abgesperrten Abgänge um n-1 nach rechts bzw. umgekehrt nach links zu verschieben.

In vorteilhafter Weiterbildung der Erfindung kann die Fahrgassenschaltung aber auch eine automatisierte Steuervorrichtung umfassen, mithilfe derer die Absperrmittel in der genannten Weise automatisiert in Abhängigkeit eines Betriebsparameters umgeschaltet werden könne, um das zum Maschinenrand nächstliegende aktive Ausbringelement einmal am rechten Maschinenrand und einmal am linken Maschinenrand zu haben.

Eine solche Steuervorrichtung kann beispielsweise ein Navigationsmodul, beispielsweise in Form eines GPS-Moduls aufweisen, mithilfe dessen die Fahrtrichtung bestimmbar ist, und in Abhängigkeit der jeweiligen Fahrtrichtung die Absperrmittel ansteuern bzw. umschalten. Erkennt das Navigationsmodul beispielsweise das Befahren einer Fahrgasse von Süd nach Nord, kann die Fahrgassenschaltung veranlasst werden, ein erstes Absperrmuster einzustellen. Erkennt das Navigationsmodul dann das Befahren einer Fahrgasse in entgegengesetzter Richtung von Nord nach Süd kann die Fahrgassenschaltung dazu veranlasst werden, das Absperrmuster umzuschalten. Vorteilhafterweise kann die Steuervorrichtung dabei dazu ausgebildet sein, einen Wendevorgang der Fahrtrichtung zu erkennen, beispielsweise das Befahren einer U-förmigen Schleife. Gegebenenfalls kann die Erkennung eines Wendevorgangs verfeinert werden, indem das Erreichen eines Endabschnitts bzw. Randabschnitts des zu bearbeitenden Feldes erkannt wird, in welchem eine Fahrgasse endet, wobei eine solche Positionserkennung ggf. auch alleine dazu genutzt werden kann, eine Umschaltung zu veranlassen.

Alternativ oder zusätzlich zu einem Navigationsmodul im Sinne eines GPS-Moduls kann ggf. auch mit einer lokalen Fahrtrichtungserkennung gearbeitet werden, beispielsweise durch eine Näherungssensorik, die die Annäherung an einen Endabschnitt des zu bearbeitenden Feldes erkennt, in welchem ein U-förmiger Wendevorgang erfolgt. Alternativ oder zusätzlich kann auch durch lokale Abstandssensoren eine Richtungserkennung erfolgen, beispielsweise dahingehend, ob ein bestimmtes Feld von rechts nach links oder von links nach rechts durchfahren wird.

Alternativ oder zusätzlich zu einer automatisierten Umschaltung in Abhängigkeit einer Fahrtrichtung und/oder in Abhängigkeit eines Wendevorgangs und/oder in Abhängigkeit des Erreichens eines vorbestimmten Feldabschnitts kann die genannte Steuervorrichtung aber auch in Abhängigkeit eines Spurreißer-Signals arbeiten, welches angibt, ob der Spurreißer auf der rechten Maschinenseite oder auf der linken Maschinenseite aktiviert wird. Beispielsweise kann ein solches Spurreißersignal ein Ventilsignal sein, das die Stellung eines Spurreißerventils angibt, mittels dessen auf hydraulischem Weg der Spurreißer auf der rechten Seite oder auf der linken Seite in Position gebracht wird.

Die genannte Steuervorrichtung kann dabei vollautomatisch oder halbautomatisch arbeiten, wobei im vollautomatischen Betrieb eine Umschaltung bei Vorliegen oder Änderung des entsprechenden Fahrtrichtungssignals und/oder Wendesignals und/oder Positionssignals und/oder Spurreißersignals das Umschalten der Fahrgassenschaltung vollautomatisch ohne weiteres Einwirken eines Maschinenführers erfolgen kann. Im halbautomatischen Betrieb kann bei Vorliegen bzw. Änderung des entsprechenden Signals ein Umschalten vorgeschlagen werden und/oder eine Bestätigung durch den Maschinenführer abgefragt werden, um beispielsweise durch Antippen eines Touchscreens den Umschaltvorgang dann letztlich zu veranlassen.

Die Absperrmittel und die damit zusammenwirkenden Fahrgassenschaltung der Einstellvorrichtung können grundsätzlich verschieden ausgebildet sein, um das Absperrmuster in der genannten Weise quer zur Fahrtrichtung verstellen zu können. Beispielsweise können die Absperrmittel einen Verteilerkopfeinsatz umfassen, der in den Verteilerkopf-Innenraum einsetzbar ist und eine Anzahl an Absperrelementen aufweist, die in einem vorbestimmten Muster angeordnet sind, um jeden n-ten Abgang des Verteilerkopfes offen zu lassen und die dazwischen liegenden Abgänge für das körnige Gut zu sperren. Beispielsweise können solche Absperrelemente eine gitterförmige oder netzartige Struktur besitzen, um körniges Gut abzufangen bzw. zu blockieren, andererseits aber Luft hindurchströmen zu lassen.

Je nach gewünschtem Reihenabstand können dabei verschiedene Verteilerkopfeinsätze in den Verteilerkopf eingesetzt werden, beispielsweise um jeden zweiten Abgang abzusperren und jeden zweiten Abgang offen zu lassen. Soll indes nur noch mit jedem dritten oder jedem vierten Ausbringelement abgelegt werden, um beispielsweise eine vergrößerten Reihenabstand von 35 cm oder 50 cm zu realisieren, kann ein Verteilerkopfeinsatz verwendet werden, der jeweils zwei Abgänge sperrt und jeden dritten offen lässt, bzw. mit einem nochmals anderen Verteilerkopfeinsatz gearbeitet werden, der jeweils drei Abgänge sperrt und jeden vierten Abgang offen lässt.

Um das Umlegen des Absperrmusters in der erläuterten Weise bewerkstelligen zu können, kann der genannte Verteilerkopfeinsatz im Verteilerkopf drehbar gelagert sein, insbesondere um eine aufrechte Drehachse, die koaxial zum Steigrohr des Verteilerkopfes ausgerichtet sein kann. Durch Verdrehen des Verteilerkopfeinsatzes kommen dessen Absperrelemente jeweils vor anderen Abgängen des Verteilerkopfes zu liegen, so dass je nach Drehstellung des Verteilerkopfeinsatzes einmal eine erste Untergruppe der Abgänge oder eine zweite Untergruppe der Abgänge blockiert wird bzw. die offen bleibenden n-ten Abgänge unterschiedlich sind, d.h. einmal eine erste Gruppe offen bleibt und einmal eine zweite Gruppe offen bleibt, die über die Ausbringleitungen mit jeweils anderen Ausbringelementen verbunden sind, so dass ein Umschalten des Musters der aktiven Ausbringelemente durch Verdrehen des Verteilerkopfeinsatzes erzielt werden kann.

In einfachster Ausführung kann der genannte Verteilerkopf durch einen händischen Drehaktor beispielsweise in Form eines Stellhebels zwischen seinen beiden Stellungen hin und her gedreht werden. Um eine komfortablere und automatisierte Betätigung der Fahrgassenschaltung zu ermöglichen, kann ein von der Steuervorrichtung ansteuerbarer Stellaktor vorgesehen sein, der mit dem Verteilerkopfeinsatz koppelbar ist derart, dass ein Verstellen des Stellaktors zu einem Verdrehen des Verteilerkopfeinsatzes führt.

Beispielsweise kann ein Druckmittelzylinder mit dem Verteilerkopfeinsatz gekoppelt sein, so dass ein Einfahren bzw. Ausfahren des Druckmittelzylinders ein Verdrehen des Verteilerkopfeinsatzes zwischen seinen beiden Stellungen entsprechend dem gewünschten Ausbringmuster erreicht wird.

Alternativ oder zusätzlich zu einem Druckmittelzylinder kann aber auch ein anderer Stellantrieb vorgesehen sein, beispielsweise ein elektrischer Spindelantrieb oder ein Drehmotor, der über ein Stellgetriebe mit dem Verteilerkopfeinsatz kuppelbar ist, um den Verteilerkopfeinsatz verdrehen zu können.

Je nach Ausbildung des Stellantriebs kann es hilfreich sein, zwei Endstellungen für die Verdrehung des Verteilerkopfeinsatzes vorzugeben, beispielsweise durch Anschläge, gegen die der Verteilerkopf gefahren werden kann. In den genannten Endstellungen sperrt der Verteilerkopfeinsatz in der genannten Weise jeweils unterschiedliche Untergruppen der Abgänge des Verteilerkopfes.

Anstelle eines solchen Verteilerkopfeinsatzes kann der Verteilerkopf aber auch mit den eingangs schon erwähnten Bypass-Absperrmitteln, beispielsweise in Form von weichenartigen Umlenkklappen bzw. Absperrklappen versehen sein, mit Hilfe derer das Saatgut-Druckluft-Gemisch wahlweise über einen Abgang in die daran angeschlossene Ausbringleitung oder über den jeweiligen Abgang in eine Rückführleitung beispielsweise zu einem Sammeltrichter um das Steigrohr herum zurückgeleitet werden kann. Diese Bypass-Absperrmittel können vorteilhafterweise motorisch betätigbar sein, beispielsweise mittels eines Elektroantriebs und/oder mittels Druckmittelzylinder, so dass in der genannte Weise auch hier die Fahrgassenschaltung motorisch zwischen verschiedenen Absperrmustern umschalten kann, je nachdem, in welcher Richtung eine Fahrgassen befahren wird.

Die Erfindung wird nachfolgend anhand eines vorteilhaften Ausführungsbeispiels der Erfindung und zugehörigen Zeichnungen näher erläutert. In den Zeichnungen zeigen:
- Fig. 1:: eine Seitenansicht einer landwirtschaftlichen Ausbringmaschine in Form einer Sämaschine nach einer vorteilhaften Ausführung der Erfindung,
- Fig. 2:: eine perspektivische Darstellung des Verteilerkopfs der Sämaschine aus Figur 1, die die Vielzahl der umfangsseitigen Abgänge des Verteilerkopfs zeigt,
- Fig. 3:: eine Draufsicht auf den Verteilerkopf aus Fig 2, die die Absperrelemente des verdrehbaren Verteilerkopfeinsatzes zeigt,
- Fig. 4:: einen Längsschnitt durch den Verteilertkopf aus den vorherigen Figuren,

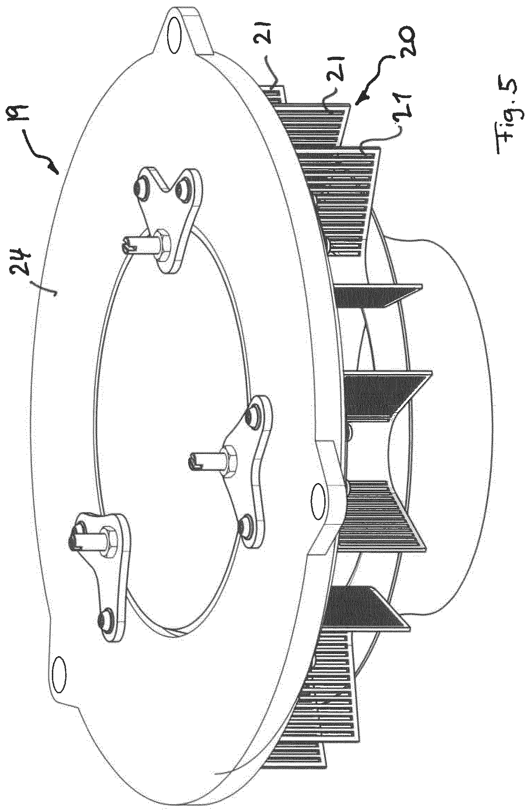

- Fig. 5:: eine perspektivische Darstellung des verdrehbaren Verteilerkopfeinsatzes für den Verteilerkopf der Sämaschine aus Figur 2, die die geschlitzen Absperrelemente der Verteilerkopfeinsatzes zeigt,
- Fig. 6:: eine Draufsicht auf die Ausbringelemente der Sämaschine in zwei benachbarte Fahrgassen, wobei mit minimalem Reihenabstand und sämtlichen Ausbringelementen abgelegt wird, und
- Fig. 7:: eine Draufsicht auf die Ausbringelemente der Sämaschine in zwei benachbarte Fahrgassen ähnlich Figur 6, wobei jedoch mit vergrößertem Reihenabstand durch Absperrung einiger Ausbringelemente abgelegt wird, wobei über die Fahrgassen hinweg mit gleichbleibendem Reihenabstand, jedoch unterschiedlicher Asymmetrie der Arbeitsbreite abgelegt wird.

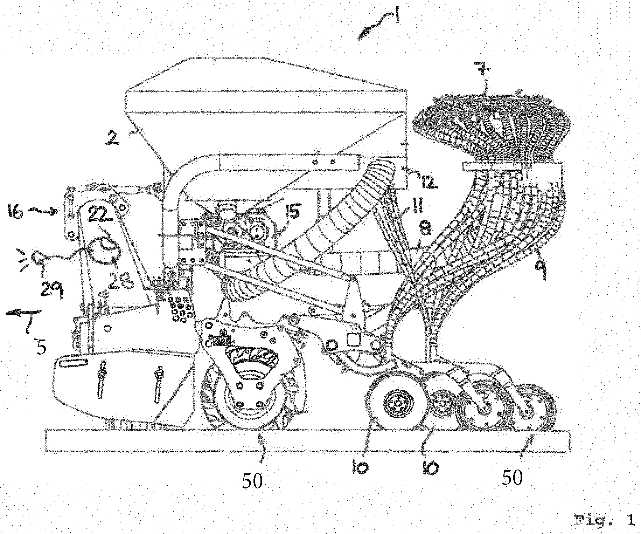

Wie Fig. 1 zeigt, kann die landwirtschaftliche Ausbringmaschine 1 als Sämaschine in Form eines Anbaugeräts ausgeführt sein, das in an sich bekannter Weise über einen Anbaubock 16 an einen nicht gezeigten Schlepper anbaubar sein kann. Auf einem mehrgliedrigen Maschinenrahmen kann ein Speicherbehälter bzw. Tank 2 angeordnet sein, in dem das auszubringende Saatgut bevorratet sein kann.

Der Speicherraum 2 beschickt über eine pneumatische Fördereinrichtung 15, die beispielsweise ein Gebläse umfassen kann, sowie eine Speiseleitung 8 einen Verteilerkopf 7, von dem aus das Saatgut oder der Dünger bzw. generell das körnige Gut verteilt und über Ausbringleitungen 9 zu Ausbringelementen 10 geführt wird.

Die Ausbringelemente 10 können geeignete Scharkörper umfassen, um das Saatgut in Furchen ablegen zu können. Wie Fig. 1 zeigt, können den Ausbringelementen 10 vorauslaufend angeordnete Bodenwerkzeuge 50, beispielsweise in Form eines Grubbers, einer Scheibenegge oder anderer den Boden vorbereitender Bodenbearbeitungswerkzeuge 50 und/oder nachlaufende Bodenbearbeitungswerkzeuge 50 beispielsweise in Form von Andruckwalzen, Zustreichern oder dergleichen vorgesehen sein.

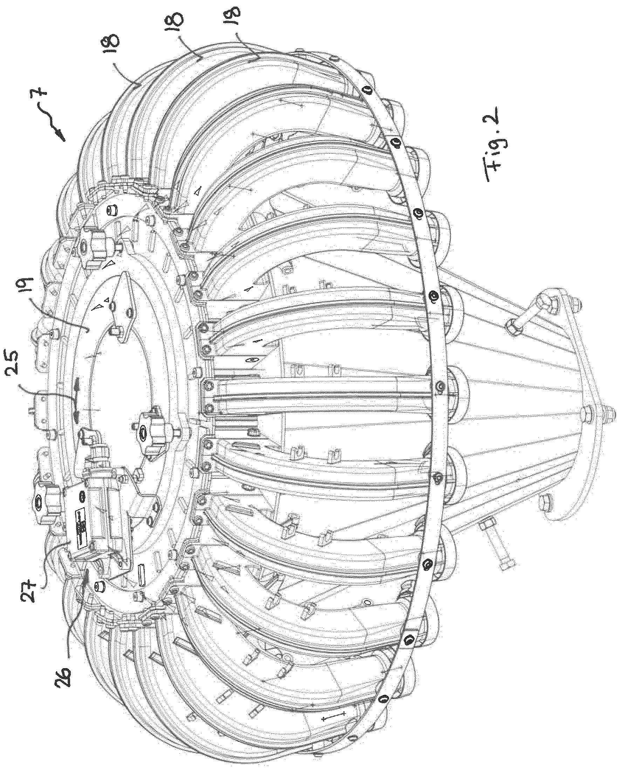

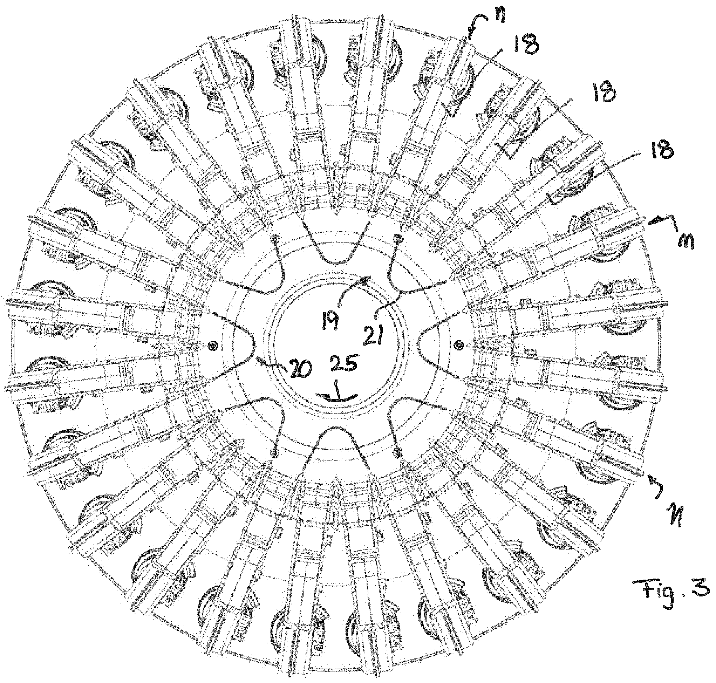

Wie die Figuren 2 und 3 zeigen, kann der Verteilerkopf 7 insgesamt pilzkopfförmig ausgebildet sein und einen Verteilerraum 6 umfassen, der von unten her durch ein Steigrohr 17 zentral mit dem körnigen Gut zusammen mit der Druckluft beschickbar ist, so dass sich das körnige Gut in dem Verteilerraum 6 zu dessen Rändern hin gleichmäßig verteilen kann. Der genannte Verteilerraum 6 kann rotationssymmetrisch, beispielsweise nach Art einer Scheibe etwa kreisrund ausgebildet sein, wobei ggf. zur Modellierung des Luftstroms die Decke und auch der Boden reliefartig, vorzugsweise aber auch rotationssymmetrisch konturiert sein können.

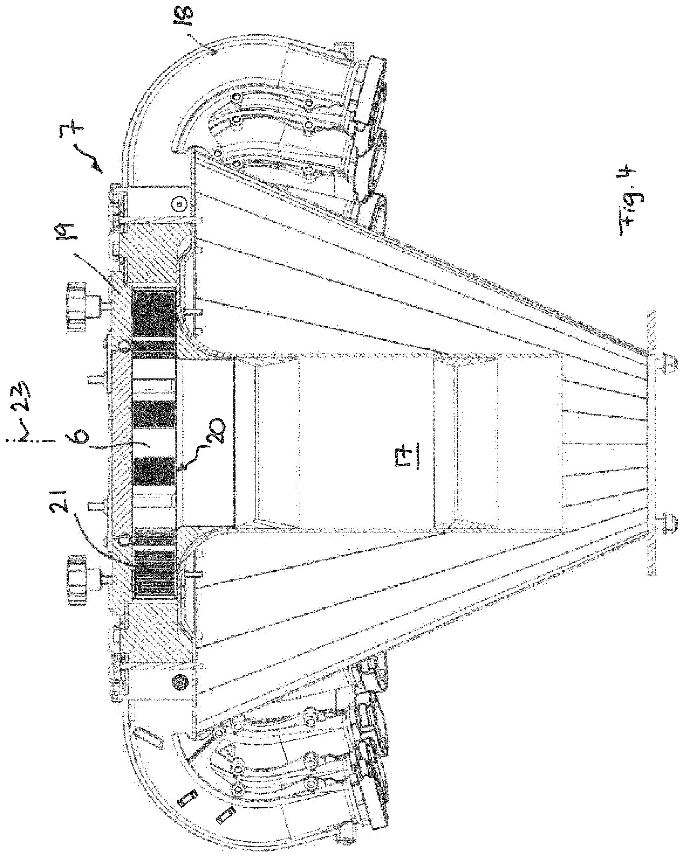

An der Umfangsseite des Verteilerraums 6 besitzt der Verteilerkopf 7 eine Vielzahl von Abgängen 18, die beispielsweise abgerundet konturiert und nach unten hängend montiert sein können, um beispielsweise einen zunächst näherungsweise horizontalen Abgangsweg nach unten zu lenken, vgl. Fig. 2 und Fig. 4.

An den genannten Abgängen 18 ist jeweils eine Ausbringleitung 9 angeschlossen, die dann zu einem jeweiligen Ausbringelement 10 führt.

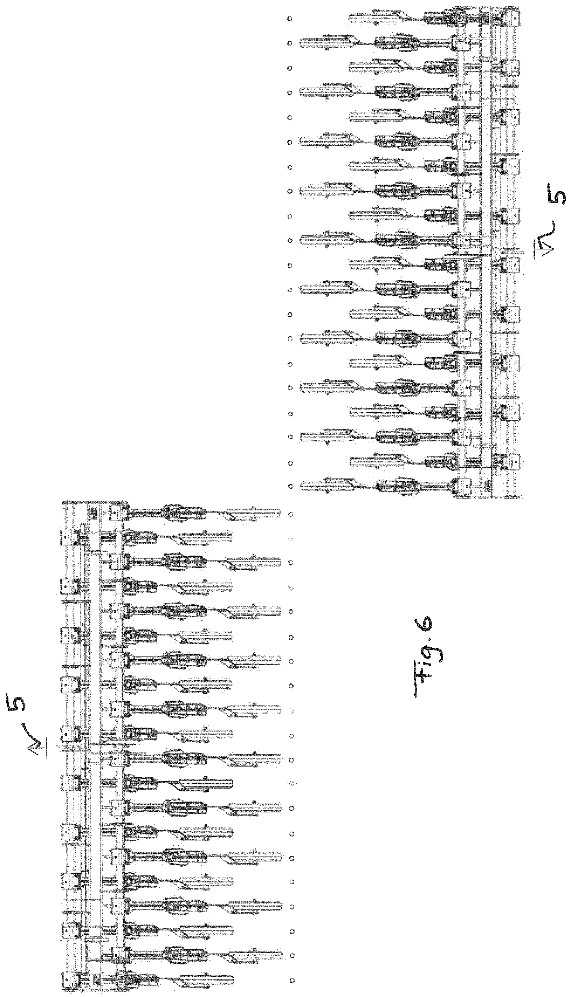

Wird der Verteilerkopf 7 ohne Verteilerkopfeinsatz gefahren, gelangt das körnige Gut zumindest näherungsweise gleichmäßig verteilt in alle Abgänge 18 und über die angeschlossenen Ausbringleitungen 9 zu allen Ausbringelementen 10. Wie Fig. 6 verdeutlicht, kann hierdurch in einem relativ engen Reihenabstand das körnige Gut ausgebracht werden, wobei bei diesem dichtesten Reihenabstand die Arbeitsbreite symmetrisch zur Maschinenmitte sein kann, da alle Ausbringelemente 10 ablegen. Bei dem in Fig. 6 gezeigten Beispiel besitzt die Ausbringmaschine 1 zwanzig Ausbringelemente 10, so dass bei Befahren einer Fahrgasse das körnige Gut in insgesamt zwanzig Reihen abgelegt werden kann. Wie der Fahrtrichtungspfeil 5 in Fig. 6 andeutet, werden die Fahrgassen mäanderförmig hin und hergehend befahren. Ist die Verteilung der ausbringenden aktiven Ausbringelemente 10 symmetrisch zur Maschinenmitte, ergibt sich beim Anschlussfahren kein Problem, da die Ausbringelemente rechts und links gleich weit vom Maschinenrand entfernt sind.

Um den Reihenabstand zu vergrößern, kann in den Verteilerkopf 7 ein Verteilerkopfeinsatz 19 eingesetzt werden, der eine Untergruppe der Abgänge 18 für den Durchgang von körnigem Gut sperrt. Der Verteilerkopfeinsatz 19 kann dabei als Absperrmittel 20 beispielsweise mehrere Absperrelemente in Form geschlitzter Gitter umfassen, vgl. Fig. 4, die zwar Luft in den jeweiligen Abgang 18 eintreten lassen, jedoch das körnige Gut hieran hindern. Wie Fig. 3 zeigt, können die Absperrmittel 20 keilförmig bzw. nach Art eines abgerundeten Keils vor den zu sperrenden Abgängen 18 platziert sein, wobei je nach Verteilereinsatz 19 jeweils ein einzelner Abgang 18 oder auch zwei benachbarte Abgänge 18 gleichzeitig von einem Absperrelement 21 blockiert sein können. Ohne in den Figuren eigens gezeigt zu sein, könnten beispielsweise auch jeweils drei nebeneinander liegende Abgänge blockiert werden, um nur noch jeden vierten Abgang 18 offen zu lassen.

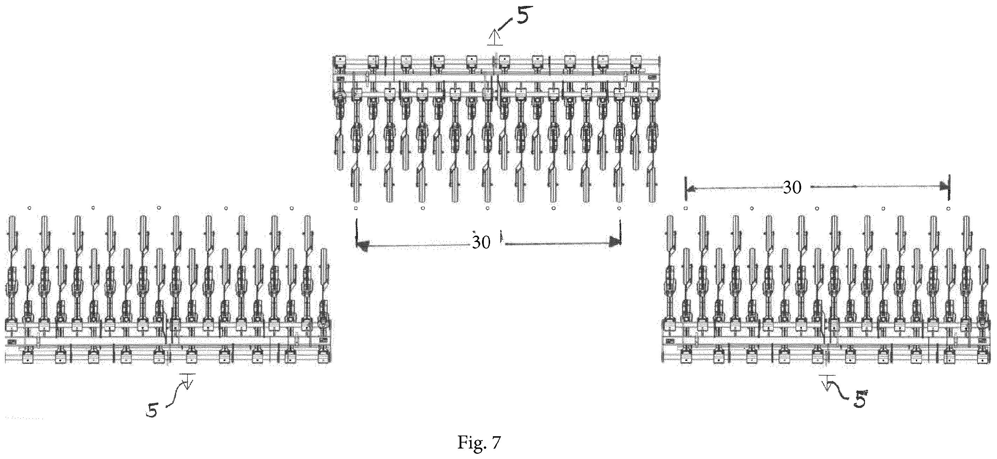

Bei dem in Fig. 3 gezeigten Beispiel, bleibt jeder dritte Abgang 18 offen, so dass über jedes dritte Ausbringelement 10 abgelegt wird, während in Fig. 7 verdeutlicht wird, dass nur jeder vierte Abgang 18 offen bleibt. Von den Ausbringelementen 10 sind jeweils drei benachbarte inaktiv und nur noch jedes vierte Ausbringelement aktiv, so dass mit einem insgesamt vierfach so großen Reihenabstand - im Vergleich zu Fig. 6 - abgelegt wird.

Wie sich aus der Darstellung der Fig. 7 ergibt, ist die Arbeitsbreite 30 der Ausbringmaschine durch die teilweise abgesperrten Abgänge 8 nicht mehr symmetrisch zur Maschinenmitte, sondern zu einer Seite hin versetzt.

Um trotzdem beim mäanderförmigen Befahren der Fahrgassen in jeweils gleichem Abstand zur schon bearbeiteten Fahrgasse fahren zu können, d.h. den Spuranreißer rechts und links in gleicher Einstellung fahren zu können, kann das Muster der abgeschalteten und offen bleibenden Ausbringelemente 10 durch eine Fahrgassenschaltung 22 wahlweise nach rechts und links umgelegt werden. Diese Fahrgassenschaltung 10 kann die Absperrmittel 20 verstellen, mit Hilfe derer einzelne Abgänge 18 abgesperrt bzw. offengelassen werden.

Insbesondere kann der genannte Verteilerkopfeinsatz 19 drehbar in dem Verteilerkopf 7 angeordnet sein, insbesondere um eine aufrechte Drehachse 23, die mit der Symmetrieachse des Verteilerkopfs 7 und/oder der Achse des Steigrohrs 17 zusammenfallen kann.

Der Verteilerkopfeinsatz 19 kann beispielsweise einen plattenförmigen Deckel 24 umfassen, der einen Teil der Decke des Verteilerraums 6 bzw. des Verteilerkopfs 7 bilden kann, wobei die Absperrelemente 21 an dem genannten Deckel 24 des Verteilerkopfeinsatzes 19 starr befestigt sein können und vom Deckel 24 aus in den Verteilerraum 6 hineinragen, um dort vor einem bzw. jeweiligen Abgängen 18 positioniert zu sein. Wird der Deckel 24 zusammen mit den daran befestigten Absperrelementen 21 verdreht, kommen die besagten Absperrelemente 21 vor jeweils anderen Abgängen 18 zu liegen, wie der Verdrehungspfeil 25 in den Figuren 2 und 3 verdeutlicht.

Die Einstellvorrichtung 26 zum Einstellen des Reihenabstands, die den genannten Verteilerkopfeinsatz 19 umfassen kann, kann in vorteilhafter Weise einen Verdrehantrieb 27 zum Verdrehen des Verteilerkopfeinsatzes 19 relativ zu den Abgängen 18 des Verteilerkopfs 7 aufweisen. Der genannte Verdrehantrieb 27 bildet dabei einen Verstellantrieb zum Verstellen der Position der Absperrelemente 21, um jeweils andere Abgänge 18 durch Verstellen der Absperrelemente 21 zu blockieren bzw. freizuschalten.

Die Einstellvorrichtung 26 kann eine Steuervorrichtung 28 umfassen, um das Muster der abgesperrten und offengebliebenen Abgänge 18 von Fahrgasse zu Fahrgasse umzuschalten. Eine solche Steuervorrichtung 28 kann beispielsweise einen elektronischen Jobrechner mit einem Arbeitsspeicher und einem Prozessor umfassen, um verschiedene Sensorsignale oder Stellsignale verarbeiten und den Stell- bzw. Verdrehantrieb 27 ansteuern bzw. betätigen zu können.

Wie Fig. 1 verdeutlicht, kann die Steuervorrichtung 28 beispielsweise ein Navigationsmodul 29 umfassen, um die Himmelsrichtung der jeweiligen Fahrtrichtung bestimmen zu können und je nachdem, ob ein Feld in beispielsweise Ost-West-Richtung oder umgekehrt in West-Ost-Richtung befahren wird, die Fahrgassenschaltung 22 zu betätigen und den Verteilerkopfeinsatz 19 entsprechend zu verdrehen.

Wie Fig. 7 verdeutlicht, insbesondere dort ein Vergleich der mittleren nach oben gehenden Fahrtrichtung mit der rechten, nach unten gehenden Fahrtrichtung 5, werden die offen gelassenen, ausbringenden, jeweils n-ten Ausbringelemente 10 um n-1 quer zur Fahrtrichtung verstellt, wenn die Fahrtrichtung verändert wird. Bei dem in Fig. 7 gezeigten Beispiel trägt jedes dritte Ausbringelement 10 um, so dass eine Querverschiebung um 3-1, d.h. um zwei Ausbringelemente erfolgt, wenn die Fahrgassenschaltung 20 die Absperrmittel 20 umschaltet, insbesondere den Verteilerkopfeinsatz 19 mit Hilfe des Verdrehantriebs 27 verdreht.

## Patentansprüche

1. Verfahren zum Ausbringen von körnigem Gut wie Saatgut oder Dünger mit Hilfe einer landwirtschaftlichen Ausbringmaschine (1), die einen pneumatischen Verteilerkopf (7) mit einer Vielzahl von Abgängen (18) aufweist, an die zu Ausbringelementen (10) führende Ausbringleitungen (9) angeschlossen sind, wobei zum Einstellen des Reihenabstands, in dem das körnige Gut ausgebracht wird, eine Untergruppe der Abgänge (18) für den Durchgang von körnigem Gut blockiert und das körnige Gut nur noch von jedem n-ten Ausbringelement ausgebracht wird, **dadurch gekennzeichnet, dass** bei einem mäanderförmigen Befahren von Fahrgassen mithilfe einer Fahrgassenschaltung (22) von Fahrgasse zu Fahrgasse unterschiedliche Untergruppen von Abgängen (18) abgesperrt werden derart, dass unter Beibehaltung des Reihenabstands die von den jeweils aktiven, offen bleibenden Ausbringelementen (10) definierte Arbeitsbreite (30) quer zur Fahrtrichtung (5) um den Betrag n-1 Ausbringelemente quer versetzt wird.

2. Verfahren nach dem vorhergehenden Anspruch, wobei die Fahrgassenschaltung (22) automatisch in Abhängigkeit eines sensorisch erfassbaren Betriebsparameters aus der Gruppe Fahrtrichtung, Wendevorgang, Feldposition und Spuranreißerstellung automatisch von einer Steuervorrichtung (28) angesteuert wird.

3. Landwirtschaftliche Ausbringmaschine zum Ausbringen von körnigem Gut wie Saatgut oder Dünger, mit einem pneumatischen Verteilerkopf (7), der eine Vielzahl von Abgängen (18) aufweist, an die zu Ausbringelementen (10) führende Ausbringleitungen (9) angeschlossen sind, wobei eine Einstellvorrichtung (26) zum Einstellen des Reihenabstands, in dem das körnige Gut ausbringbar ist, vorgesehen ist und ein Absperrmittel (20) zum Sperren einer Untergruppe der Abgänge (18) für den Durchgang von körnigem Gut derart, dass das körnige Gut nur noch von jedem n-ten Ausbringelement ablegbar ist, aufweist, **dadurch gekennzeichnet, dass** die Einstellvorrichtung (26) eine Fahrgassenschaltung (22) zum Umschalten der Absperrmittel (20) von Fahrgasse zu Fahrgasse aufweist derart, dass unter Beibehaltung des Reihenabstands verschiedene Untergruppen der Ausbringelemente (10) absperrbar sind.

4. Landwirtschaftliche Ausbringmaschine nach dem vorhergehenden Anspruch, wobei die Fahrgassenschaltung (22) dazu ausgebildet ist, die Absperrmittel (20) von Fahrgasse zu Fahrgasse derart umzuschalten, dass die von der Summe der aktiven Ausbringelemente (10) gebildete Arbeitsbreite (30) quer zur Fahrtrichtung (5) um einen Betrag, der dem Abstand von n-1 Ausbringelementen (10) entspricht, verstellbar ist.

5. Landwirtschaftliche Ausbringmaschine nach einem der vorhergehenden Ansprüche, wobei eine Steuervorrichtung (28) zum automatischen Betätigen der Fahrgassenschaltung in Abhängigkeit eines Fahrtrichtungssignals vorgesehen ist.

6. Landwirtschaftliche Ausbringmaschine nach dem vorhergehenden Anspruch, wobei ein Navigationsmodul (31) zum Bestimmen der Fahrtrichtung und Bereitstellen des Fahrtrichtungssignals vorgesehen ist.

7. Landwirtschaftliche Ausbringmaschine nach einem der vorhergehenden Ansprüche, wobei eine/die Steuervorrichtung (28) zum automatischen Betätigen der Fahrgassenschaltung (22) in Abhängigkeit eines Wendesignals, das das Wenden der Ausbringmaschine anzeigt, und/oder in Abhängigkeit eines Positionssignals, das die Position der Ausbringmaschine an einem Ende oder Randabschnitt eines zu bearbeitenden Feldes angibt, vorgesehen ist.

8. Landwirtschaftliche Ausbringmaschine nach einem der vorhergehenden Ansprüche, wobei eine/die Steuervorrichtung (28) zum automatischen Ansteuern der Fahrgassenschaltung (22) in Abhängigkeit eines Spurreißersignals vorgesehen ist, das angibt, ob ein Spurreißer auf der rechten Maschinenseite oder der linken Maschinenseite aktiviert ist.

9. Landwirtschaftliche Ausbringmaschine nach dem vorhergehenden Anspruch, wobei ein Umschaltventil zum hydraulischen Umschalten des Spurreißers von der rechten Maschinenseite auf die linke Maschinenseite vorgesehen ist und das genannte Spurreißersignal bereitstellt.

10. Landwirtschaftliche Ausbringmaschine nach einem der vorhergehenden Ansprüche, wobei die Einstellvorrichtung (26) zum Einstellen des Reihenabstands einen Verteilerkopfeinsatz (19) aufweist, an dem mehrere Absperrelemente (21) zum Sperren einer Untergruppe der Abgänge (18) für den Durchgang von körnigem Gut vorgesehen sind, wobei der genannte Verteilerkopfeinsatz (19) relativ zu den Abgängen (18) verdrehbar gelagert ist derart, dass in Abhängigkeit der Drehstellung des Verteilerkopfeinsatzes (19) verschiedene Untergruppen von Abgängen (18) für den Durchgang von körnigem Gut gesperrt sind.

11. Landwirtschaftliche Ausbringmaschine nach dem vorhergehenden Anspruch, wobei ein Verdrehantrieb (27) zum motorischen Verdrehen des Verteilerkopfeinsatzes (19) relativ zu den Abgängen (18) vorgesehen ist.

12. Landwirtschaftliche Ausbringmaschine nach dem vorhergehenden Anspruch, wobei der Verdrehantrieb (27) einen Druckmittelzylinder oder einen Spindelantrieb aufweist.

13. Landwirtschaftliche Ausbringmaschine nach einem Ansprüche 10 bis 12, wobei der Verteilerkopfeinsatz (19) durch eine reine Drehbewegung um eine Drehachse (23), die koaxial zu einer Symmetrieachse des Verteilerkopfs (7) und/der zu dessen Steigrohr (17) ist, zwischen seinen Stellungen zum Blockieren der verschiednen Abgänge (18) verstellbar ist.

14. Landwirtschaftliche Ausbringmaschine nach einem der vorhergehenden Ansprüche, wobei der Verteilerkopfeinsatz (19) austauschbar am Verteilerkopf (7) montiert ist, wobei ein Satz von verschiedenen Verteilerkopfeinsätzen (19) vorgesehen ist, die unterschiedlich ausgebildete und/oder unterschiedlich viele Absperrelemente (21) zum Absperren unterschiedlich vieler Abgänge (18) und damit zum Einstellen unterschiedlicher Reihenabstände aufweisen, wobei jeder der mehreren Verteilerkopfeinsätze (19) zum Querverschieben der von den offenbleibenden Abgängen (10) definierten Arbeitsbreite (30) verdrehbar am Verteilerkopf (7) montierbar ist.
